Europäisches Patentamt

(19) European Patent Office

Office européen des brevets

(11) **EP 0 699 522 B1**

(12) **EUROPEAN PATENT SPECIFICATION**

(45) Date of publication and mention
of the grant of the patent:
**13.08.1997 Bulletin 1997/33**

(51) Int. Cl.$^6$: **B32B 27/32**, C08J 5/18,
C08L 23/16, B60R 13/02

(21) Application number: 95306141.3

(22) Date of filing: **01.09.1995**

(54) **Lining sheet for vehicle ceiling and laminate using the same**

Innenverkleidung für Kraftfahrzeugdächer und sie enthaltender Mehrschichtstoff

Feuille de revêtement pour pavillon de véhicule et produit stratifié utilisant celui-ci

(84) Designated Contracting States:
**BE DE FR GB IT NL**

(30) Priority: **05.09.1994 JP 211577/94**

(43) Date of publication of application:
**06.03.1996 Bulletin 1996/10**

(73) Proprietor:
**MITSUI PETROCHEMICAL INDUSTRIES, LTD.
Tokyo 100 (JP)**

(72) Inventors:
• **Kohyama, Masaki,
c/o Mitsui Petrochem. Ind. Ltd.
Kuga-gun, Yamaguchi 740 (JP)**
• **Uchiyama, Akira,
c/o Mitsui Petrochem. Ind. Ltd.
Chiba 299-01 (JP)**
• **Watanabe, Yuji,
c/o Hi-Sheet Industries Ltd.
Ibaraki 312 (JP)**

(74) Representative: **Cresswell, Thomas Anthony
J.A. KEMP & CO.
14 South Square
Gray's Inn
London WC1R 5LX (GB)**

(56) References cited:
**EP-A- 0 326 408**        **EP-A- 0 472 956**
**EP-A- 0 510 936**        **EP-A- 0 595 578**

• **PATENT ABSTRACTS OF JAPAN vol. 015 no. 008
(M-1067) ,9 January 1991 & JP-A-02 258247
(MITSUI PETROCHEM IND LTD) 19 October 1990,**

Remarks:
The file contains technical information submitted
after the application was filed and not included in
this specification

## Description

The present invention relates to a lining sheet suitable for use as an interior trim material for a vehicle ceiling and to a laminate comprising said lining sheet.

Conventionally, as lining sheets of vehicle interior trim materials such as those for a vehicle ceiling, soft polyvinyl chloride sheets, particularly soft polyvinyl chloride sheets having embossed patterns, have been mainly used. However, the lining sheets formed from the soft polyvinyl chloride can hardly undergo thermal disposal because of generation of hydrochloric acid or can hardly be recycled, though they have a high moldability and fine handling. Therefore, substitutes for the lining sheets formed from soft polyvinyl chloride have been desired.

As the substitutes for the lining sheet formed from soft polyvinyl chloride, lining sheets formed from polyolefins have been conventionally studied. For example, olefin thermoplastic elastomers have been studied as described in JP-A-258247/1990. In this publication, a lining sheet formed from a partially crosslinked thermoplastic elastomer comprising a mixture of a polypropylene resin, a polyethylene resin and an ethylene-$\alpha$-olefin copolymer rubber is described.

In the lining sheet formed from the olefin thermoplastic elastomer, however, there is a problem since the lining sheet does not always have satisfactory resistance to surface damage and resistance to penetration. Further, this olefin thermoplastic elastomer has poor thin film-forming properties, so that it is impossible to obtain a lining sheet of uniform and small thickness from the elastomer. When a laminate is produced using a lining sheet of non-uniform and small thickness obtained from the olefin thermoplastic elastomer and this laminate is subjected to molding, the surface of the laminate is easily wrinkled.

Accordingly, there has been desired a lining sheet for a vehicle ceiling which has excellent resistance to surface damage, resistance to penetration and emboss transference (i.e., embossing characteristics), particularly a lining sheet for a vehicle ceiling not only having such excellent properties but also having a uniform and small thickness. Further, there has also been desired a laminate comprising a lining sheet having not only such excellent properties but also a uniform and small thickness and which has such a high moldability that no wrinkles occur when it is molded.

The present invention seeks to solve such problems associated with the prior art as mentioned above, and to provide a lining sheet for a vehicle ceiling which has excellent resistance to surface damage, resistance to penetration and embossing characteristics, particularly a lining sheet having not only such excellent properties but also a uniform and small thickness.

The present invention also seeks to provide a laminate of high moldability in which the above-mentioned lining sheet having excellent properties is used as a surface layer.

The present invention provides a lining sheet for a vehicle ceiling, which sheet comprises a poly-1-butene resin (I) in an amount of 5 to 40 parts by weight,

an olefin thermoplastic elastomer (II) in an amount of 50 to 80 parts by weight, and

a polypropylene resin (III) in an amount of 5 to 30 parts by weight,

the total amount of said components (I), (II) and (III) being 100 parts by weight;

wherein the elastomer (II) is a partially crosslinked thermoplastic elastomer obtainable by dynamically heat treating, in the presence of an organic peroxide, a mixture comprising an ethylene-$\alpha$-olefin copolymer rubber (a) in an amount of 30 to 90 parts by weight, and either

(i) a polypropylene resin (b) in an amount of 10 to 70 parts by weight, the total amount of components (a) and (b) being 100 parts by weight, or

(ii) a polypropylene resin (b) in an amount of 5 to 50 parts by weight, and

a polyethylene resin (c) in an amount of 5 to 25 parts by weight, the total amount of components (a), (b) and (c) being 100 parts by weight.

The present invention also provides a laminate comprising a lining sheet layer as defined above and a polyolefin foam layer.

The present invention additionally provides a process for producing a lining sheet or laminate as defined above comprising forming the thermoplastic elastomer (II) by dynamically heat treating, in the presence of an organic peroxide, a mixture comprising an ethylene-$\alpha$-olefin copolymer rubber (a) in an amount of 30 to 90 parts by weight, and a polypropylene resin (b) in an amount of 10 to 70 parts by weight, the total amount of said components (a) and (b) being 100 parts by weight; melt kneading the poly-1-butene resin (I), the thermoplastic elastomer (II) and the polypropylene resin (III) in a kneading machine; forming the thus formed composition into a sheet using a sheet forming machine; and, if desired, forming the thus formed sheet into a laminate with a polyolefin foam layer; or forming the thermoplastic elastomer (II) by dynamically heat treating, in the presence of an organic peroxide, a mixture comprising an ethylene-$\alpha$-olefin copolymer rubber (a) in an amount of 30 to 90 parts by weight, a polypropylene resin (b) in an amount of 5 to 50 parts by weight, and a polyethylene resin (c) in an amount of 5 to 25 parts by weight, the total amount of components (a), (b) and (c) being 100 parts by weight; melt kneading the poly-1-butene resin (I), the thermoplastic elastomer (II) and the polypropylene resin (III) in a kneading machine; forming the thus formed composition into a sheet using a sheet forming machine; and, if desired, forming the thus formed sheet into a laminate with a polyolefin foam layer.

The present invention further provides the use of a lining sheet layer as defined above in the production of a laminate as defined above; the use of a laminate as defined above in the production of a shaped article; and a shaped article formed of a laminate as defined above.

The lining sheet for a vehicle ceiling according to the invention is formed from a poly-1-butene resin composition containing a poly-1-butene resin (I), an olefin thermoplastic elastomer (II) and a polypropylene resin (III) in the specific amounts.

Poly-1-butene resin (I)

The poly-1-butene resin (I) used in the invention preferably is:

(1) a 1-butene homopolymer having a melt flow rate (MFR: ASTM D 1238, 190 °C, load of 2.16 kg) of 0.01 to 20 g/10 min, preferably 0.02 to 15 g/10 min, more preferably 0.05 to 15 g/10 min,

(2) a 1-butene-ethylene copolymer having a melt flow rate (MFR: ASTM D 1238, 190 °C, load of 2.16 kg) of 0.01 to 20 g/10 min, preferably 0.02 to 15 g/10 min, more preferably 0.05 to 15 g/10 min, and having an ethylene content of 0.1 to 2 % by mol, preferably 0.2 to 1.5 % by mol, or

(3) a 1-butene-$\alpha$-olefin copolymer having a melt flow rate (MFR: ASTM D 1238, 190 °C, load of 2.16 kg) of 0.01 to 20 g/10 min, preferably 0.02 to 15 g/10 min, more preferably 0.05 to 15 g/10 min, and having an $\alpha$-olefin content of 1.0 to 10 % by mol, preferably 2.0 to 8.0 % by mol.

Examples of the $\alpha$-olefins constituting the 1-butene-$\alpha$-olefin copolymer (3) include propylene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexane and vinylnorbornane.

In the present invention, the poly-1-butene resin (I) is used in an amount of 5 to 40 parts by weight, preferably 5 to 35 parts by weight, more preferably 10 to 30 parts by weight, based on 100 parts by weight of the total amount of the poly-1-butene resin (I), the olefin thermoplastic elastomer (II) and the polypropylene resin (III).

When the poly-1-butene resin (I) is used in an amount as defined above, a poly-1-butene resin composition capable of providing a lining sheet for a vehicle ceiling having excellent resistance to surface damage, resistance to penetration and embossing characteristics can be obtained.

Olefin thermoplastic elastomer (II)

The olefin thermoplastic elastomer (II) used in the invention is:

(1) a partially crosslinked thermoplastic elastomer obtainable by dynamically heat treating a mixture comprising an ethylene-$\alpha$-olefin copolymer rubber (a) and a polypropylene resin (b) in the specific amounts, in the presence of an organic peroxide, or

(2) a partially crosslinked thermoplastic elastomer obtainable by dynamically heat treating a mixture comprising an ethylene-$\alpha$-olefin copolymer rubber (a), a polypropylene resin (b) and a polyethylene resin (c) in the specific amounts, in the presence of an organic peroxide.

In the present invention, the thermoplastic elastomer (2) which contains the polyethylene resin (c) is preferably used to enhance the resistance to penetration.

The ethylene-$\alpha$-olefin copolymer rubber (a) used in the invention is generally an amorphous random elastomeric copolymer having an ethylene content of 50 to 90 % by mol, preferably 55 to 85 % by mol. Examples include an ethylene-propylene copolymer rubber, an ethylene-propylene-nonconjugated diene copolymer rubber, an ethylene-1-butene copolymer rubber and an ethylene-butadiene copolymer rubber. Of these, preferred are the ethylene-propylene copolymer rubber and the ethylene-propylene-nonconjugated diene copolymer rubber, and particularly preferred is the ethylene-propylene-nonconjugated diene copolymer rubber. When the ethylene-propylene-nonconjugated diene copolymer rubber is used, an olefin thermoplastic elastomer having excellent heat resistance, tensile properties and impact resilience can be obtained. Examples of the nonconjugated dienes include dicyclopentadiene, 1,4-hexadiene, cyclooctadiene, methylenenorbornene and ethylidenenorbornene.

The polypropylene resin (b) used in the invention is, for example, a homopolymer of propylene or a propylene-$\alpha$-olefin copolymer comprising propylene and another $\alpha$-olefin and containing constituent units derived from the $\alpha$-olefin in amounts of not more than 20 % by mol.

Examples of such α-olefins include ethylene, 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexane and vinylnorbornane.

The copolymer of propylene and the above olefins may be a random copolymer or a block copolymer.

Of the above polymers, preferred is the propylene homopolymer or the propylene-ethylene copolymer.

The polyethylene resin (c) used in the invention is, for example, a homopolymer of ethylene or an ethylene-α-olefin copolymer comprising ethylene and another α-olefin, containing constituent units derived from the α-olefin in amounts of not more than 15 % by mol and having a crystallinity, as measured by X-ray analysis, of not less than 20 %, preferably not less than 30 %.

Examples of such α-olefins include propylene, 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexane and vinylnorbornane.

The copolymer of ethylene and the above olefins may be a random copolymer or a block copolymer.

When the thermoplastic elastomer used in the invention comprises the ethylene-α-olefin copolymer rubber (a) and the polypropylene resin (b), the ethylene-α-olefin copolymer rubber (a) is used in an amount of 30 to 90 parts by weight, preferably 35 to 85 parts by weight, based on 100 parts by weight of the total amount of the ethylene-α-olefin copolymer rubber (a) and the polypropylene resin (b); and the polypropylene resin (b) is used in an amount of 10 to 70 parts by weight, preferably 15 to 65 parts by weight, based on 100 parts by weight of the total amount of the ethylene-α-olefin copolymer rubber (a) and the polypropylene resin (b).

When the thermoplastic elastomer used in the invention comprises the ethylene-α-olefin copolymer rubber (a), the polypropylene resin (b) and the polyethylene resin (c), the ethylene-α-olefin copolymer rubber (a) is used in an amount of 30 to 90 parts by weight, preferably 35 to 85 parts by weight, based on 100 parts by weight of the total amount of the ethylene-α-olefin copolymer rubber (a), the polypropylene resin (b) and the polyethylene resin (c); the polypropylene resin (b) is used in an amount of 5 to 50 parts by weight, preferably 8 to 45 parts by weight, based on 100 parts by weight of the total amount of the ethylene-α-olefin copolymer rubber (a), the polypropylene resin (b) and the polyethylene resin (c); and the polyethylene resin (c) is used in an amount of 5 to 25 parts by weight, preferably 7 to 20 parts by weight, based on 100 parts by weight of the total amount of the ethylene-α-olefin copolymer rubber (a), the polypropylene resin (b) and the polyethylene resin (c).

In the present invention, in addition to the ethylene-α-olefin copolymer rubber (a) and the polypropylene resin (b), or the ethylene α-olefin copolymer rubber (a), the polypropylene resin (b) and the polyethylene resin (c), the olefin thermoplastic elastomer (II) may contain peroxide non-crosslinkable type hydrocarbon rubbers and conventionally known additives such as a mineral oil type softening agent, light stabilizer, ultraviolet light absorber, filler, pigment, colourant, antioxidant, processing aid and antistatic agent, with the proviso that the objects of the invention are not impaired.

The peroxide non-crosslinkable type hydrocarbon rubbers are hydrocarbon type rubber-like materials which are not crosslinked even if they are mixed and kneaded with peroxides under heating and which do not have reduced flowability, for example, polyisobutylene, a butyl rubber (IIR), a propylene-ethylene copolymer rubber having a propylene content of not less than 70 % by mol, and atactic polypropylene.

The olefin thermoplastic elastomer can be obtained by, for example, dynamically heat treating a blend of the above-mentioned components in the presence of an organic peroxide so as to cause partial crosslinking.

The term "dynamically heat treating" means kneading in a molten state.

Examples of the organic peroxides used for preparing the thermoplastic elastomer include dicumyl peroxide, di-tert-butyl peroxide, 2,5-dimethyl-2,5-di-(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcylohexane, n-butyl-4,4-bis(tert-butylperoxy)valerate, benzoyl peroxide, p-chlorobenzoyl peroxide, 2,4-dichlorobenzoyl peroxide, tert-butyl peroxybenzoate, tert-butyl perbenzoate, tert-butyl peroxyisopropylcarbonate, diacetyl peroxide, lauroyl peroxide and tert-butylcumyl peroxide.

Of these, preferred are 2,5-dimethyl-2,5-di(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate, and most preferred is 1,3-bis(tert-butylperoxyisopropyl)benzene, from the viewpoints of odor and scorch stability.

The amount of the organic peroxide used is generally 0.05 to 3 % by weight, preferably 0.1 to 1 % by weight, more preferably 0.1 to 0.5 % by weight, based on the total amount of the components (a), (b) and (c). When the amount of the organic peroxide is within the above range, the resulting thermoplastic elastomer has improved heat resistance, tensile properties, rubbery properties such as elastic recovery and impact resilience, strength and flowability.

As the kneading apparatus, an extruder is used in the invention. Above all, a non-open type apparatus is preferably used. The kneading is preferably carried out in an atmosphere of an inert gas such as nitrogen or carbon dioxide. The kneading is conducted at a temperature at which the half-life of the organic peroxide used is less than one minute. Thus the temperature is usually 150 to 280 °C, preferably 170 to 240 °C, and the kneading is conducted for 1 to 20 minutes, preferably 1 to 10 minutes. The shearing force applied is usually 10 to $10^4$ sec$^{-1}$, preferably $10^2$ to $10^3$ sec$^{-1}$, in terms of shear rate.

In the partial crosslinking reaction using the organic peroxide, there can be added crosslinking assistants, such as sulfur, p-quinonedioxime, p,p'-dibenzoylquinonedioxime, N-methyl-N,4-dinitrosoaniline, nitrobenzene, diphenylguanidine and trimethylolpropane-N,N'-m-phenylenedimaleimide; polyfunctional methacrylate monomers, such as divinylbenzene, triallyl cyanurate, ethylene glycol dimethacrylate, diethylene glycol dimethacrylate, polyethylene glycol dimethacrylate, trimethylolpropane trimethacrylate and allyl methacrylate; and polyfunctional vinyl monomers, such as vinyl butyrate and vinyl stearate. Depending on such compounds, a uniform and mild crosslinking reaction can be expected. Particularly, divinylbenzene is preferably used from the viewpoint of easy handling. The amount of the crosslinking assistant or the polyfunctional vinyl monomer which may be added is 0.1 to 2 % by weight, preferably 0.3 to 1 % by weight, based on the total amount of the ethylene-$\alpha$-olefin copolymer rubber (a) and the polypropylene resin (b), or the ethylene $\alpha$-olefin copolymer rubber (a), the polypropylene resin (b) and the polyethylene resin (c). When the amount of the crosslinking assistant or the polyfunctional vinyl monomer is within the above range, a composition having a high flowability and being free from a change in propelies caused by heat history when it is molded can be obtained.

In order to accelerate decomposition of the organic peroxide, decomposition accelerators may be used. Examples of such decomposition accelerators include tertiary amines such as triethylamine, tributylamine and 2,4,6-tris(dimethylamino)phenol, and naphthenates of aluminium, cobalt, vanadium, copper, calcium, zirconium, manganese, magnesium, lead and mercury.

By dynamically heat treating the blend of the above components in the presence of the organic peroxide as described above, partial crosslinking is carried out.

In the present invention, the expression "the thermoplastic elastomer is partially crosslinked" means that the gel content as measured in the following manner is not less than 20 %, preferably 20 to 99.5 %, particularly preferably 45 to 98 %.

Measurement of gel content

A 100 mg sample of the thermoplastic elastomer is weighed, and cut into small pieces having a size of 0.5 mm $\times$ 0.5 mm $\times$ 0.5 mm. In a sealed container, the sample is immersed in 30 ml of cyclohexane at 23 °C for 48 hours, then taken out on a filter paper and dried at room temperature for not less than 72 hours until a constant weight is reached.

From the weight of the dried residue, the weight of other cyclohexane-insoluble components than the polymer component (e.g. fibrous filler, filler and pigment) and the weight of the olefin resin component in the sample before immersing in the cyclohexane are subtracted. The value obtained is taken as "corrected final weight (Y)".

On the other hand, the weight of the ethylene-$\alpha$-olefin copolymer rubber in the sample, namely, "value obtained by subtracting a weight of (1) other cyclohexane-soluble components than ethylene-$\alpha$-olefin copolymer rubber (e.g., mineral oil, plasticizer), a weight of (2) the olefin resin component and a weight of (3) other cyclohexane-insoluble components than the polymer component (e.g. fibrous filler, filler and pigment) from the weight of the sample", is taken as "corrected initial weight (X)".

The gel content is calculated in accordance with the following equation.

$$\text{Gel content (\% by weight)} = \frac{\text{Corrected final weight (Y)}}{\text{Corrected initial weight (X)}} \times 100$$

In the present invention, the olefin thermoplastic elastomer (II) is used in an amount of 50 to 80 parts by weight, preferably 50 to 75 parts by weight, more preferably 55 to 75 parts by weight, based on 100 parts by weight of the total amount of the poly-1-butene resin (I), the olefin thermoplastic elastomer (II) and the polypropylene resin (III).

If the olefin thermoplastic elastomer (II) is used in an amount as defined above, a poly-1-butene resin composition capable of providing a lining sheet for a vehicle ceiling which has excellent resistance to surface damage, resistance to penetration and embossing characteristics can be obtained.

Polypropylene resin (III)

The polypropylene resin (III) used in the invention is generally a propylene homopolymer having a melt flow rate (MFR, ASTM D 1238, 230 °C, load of 2.16 kg) of 0.05 to 30 g/10 min, preferably 0.08 to 25 g/10 min, more preferably 0.1 to 20 g/10 min, or a propylene-ethylene block copolymer having a melt flow rate (MFR, ASTM D 1238, 230 °C, load of 2.16 kg) of 0.05 to 30 g/10 min, preferably 0.08 to 25 g/10 min, more preferably 0.1 to 20 g/10 min, and having an ethylene content of 5 to 30 % by mol, preferably 8 to 25 % by mol.

In the present invention, the polypropylene resin (III) is used in an amount of 5 to 30 parts by weight, preferably 10 to 30 parts by weight, more preferably 15 to 25 parts by weight, based on 100 parts by weight of the total amount of the poly-1-butene resin (I), the olefin thermoplastic elastomer (II) and the polypropylene resin (III).

If the polypropylene resin (III) is used in an amount as defined above, a poly-1-butene resin composition capable of providing a lining sheet for a vehicle ceiling which has excellent resistance to surface damage, resistance to penetration and embossing characteristics can be obtained.

## Poly-1-butene resin composition

The poly-1-butene resin composition used in the invention can be obtained by melt kneading the poly-1-butene resin (I), the olefin thermoplastic elastomer (II) and the polypropylene resin (III) in a kneading machine such as an extruder or a Banbury mixer.

## Lining sheet for a vehicle ceiling

The lining sheet for a vehicle ceiling according to the invention (hereinafter sometimes referred to simply as "lining sheet") can be obtained by forming the poly-1-butene resin composition prepared above into a sheet using a sheet forming machine.

The surface of the lining sheet of the invention may be provided with embossed patterns.

Since the lining sheet of the invention is formed from the poly-1-butene resin composition containing the above-mentioned specific thermoplastic elastomer, it has excellent embossing characteristics, and therefore sharp embossed patterns can be formed on the surface. There is no specific limitation on the embossing method; any embossing method conventionally known can be employed.

The surface of the lining sheet of the invention may be coated with a paint such as a polyurethane resin paint, an epoxy resin paint or an acrylic resin paint.

A conventional lining sheet usually has a thickness of 0.2 to 0.5 mm. However, when the poly-1-butene resin composition is used, a thin lining sheet having a uniform thickness of 0.05 to 0.1 mm can be obtained, and this thin lining sheet can be used as a lining sheet for a vehicle ceiling.

Since the lining sheet for a vehicle ceiling according to the invention is formed from the above-described poly-1-butene resin composition, it has excellent resistance to damage and resistance to penetration.

Because of such excellent properties, the lining sheet for a vehicle ceiling according to the invention can be favorably used as a surface sheet for vehicle ceiling materials.

## Laminate

The laminate according to the invention comprises a layer of the above-mentioned lining sheet (lining sheet layer) and a polyolefin foam layer made of a composition containing polyolefin and a foaming agent. The laminate of the invention may be provided with embossed patterns on the surface of the lining sheet.

Examples of the polyolefins include polyethylene, polypropylene and poly-1-butene.

Examples of the foaming agents include organic foaming agents, such as azodicarbonamide (ADCA), N,N'-dinitrosopentamethylenetetramine, 4,4'-oxybis(benzenesulfonylhydrazide), diphenylsulfone-3,3'-disulfonylhydrazide, p-toluenesulfonylsemicarbazide and trihydrazinotriazine; and inorganic foaming agents, such as sodium hydrogencarbonate, ammonium hydrogencarbonate and ammonium carbonate. Of these, azodicarbonamide (ADCA), N,N'-dinitrosopentamethylenetetramine and trihydrazinotriazine are preferably used as the organic foaming agent, and sodium hydrogencarbonate is preferably used as the inorganic foaming agent.

The foaming agent is usually used in an amount of 5 to 20 parts by weight, preferably 8 to 18 parts by weight, based on 100 parts by weight of the total amount of the polyolefin, the foaming agent and an inorganic filler (if used).

The inorganic filler may be added in an amount such that the properties of the resulting laminate are not impaired. Examples of such inorganic fillers include glass fibers, calcium carbonate, calcium silicate, clay, kaolin, talc, silica, diatomaceous earth, mica, asbestos, alumina, barium sulfate, aluminium sulfate, calcium sulfate, basic magnesium carbonate, molybdenum disulfide, graphite, glass bead and Shirasu balloons, Of these, preferred are glass fibers and talc.

The inorganic filler is usually added in an amount of 1 to 10 parts by weight, preferably 1 to 5 parts by weight, based on 100 parts by weight of the total amount of the polyolefin, the foaming agent and the inorganic filler.

The polyolefin foam can be prepared by heat foaming a composition containing the polyolefin and the foaming agent in accordance with conventionally known methods.

The laminate according to the invention can be produced by interposing an olefin resin adhesive film between the lining sheet preliminarily formed and the polyolefin foam and then fusion bonding the lining sheet and the polyolefin foam together at a temperature higher than the temperature at which the adhesive film is melted, or the laminate can be produced by directly laminating the polyolefin foam on the lining sheet during the lining sheet forming procedure.

The laminate provided with embossed patterns according to the invention can be produced by the use of a lining sheet having embossed patterns, or it can be produced by the use of a lining sheet which has not been embossed to prepare a laminate with no embossed patterns and then subjecting the surface of the lining sheet of the laminate to embossing. There is no specific limitation on the embossing method, and any embossing methods conventionally known such as a method using an embossing roll can be adopted.

The lining sheet for vehicle ceiling according to the invention is formed from a poly-1-butene resin composition comprising the poly-1-butene resin (I), the olefin thermoplastic elastomer (II) and the polypropylene resin (III) in specific amounts, and hence it has excellent resistance to surface damage, resistance to penetration and embossing characteristics. From this poly-1-butene resin composition, a lining sheet having a thickness of 0.2 to 0.5 mm can be formed, and moreover a thin lining sheet having a uniform thickness of 0.05 to 0.1 mm can be also formed because the poly-1-butene resin composition has excellent thin film-forming properties.

The laminate according to the invention uses the above-mentioned lining sheet for a vehicle ceiling, and hence it not only has excellent resistance to surface damage and resistance to penetration but also has excellent moldability so that its surface is not wrinkled even when it is molded.

## EXAMPLES

The present invention will now be further described in the following Examples.

Details of the poly-1-butene resins, the olefin thermoplastic elastomers and the propylene-ethylene block copolymer used in the Examples are given below:

(Poly-1-butene resin)

    (1) 1-butene homopolymer (hereinafter abbreviated to "PB-1")
    MFR (ASTM D 1238, 190 °C, load of 2.16 kg): 0.2 g/10 min
    (2) 1-butene-ethylene random copolymer (hereinafter abbreviated to "PB-2")
        ethylene content: 1.5 % by mol
        MFR (ASTM D 1238, 190 °C, load of 2.16 kg): 2.0 g/10 min

(Olefin thermoplastic elastomer)

(1) partially crosslinked thermoplastic elastomer (hereinafter abbreviated to "TPE-1")

This thermoplastic elastomer is obtained by dynamically heat treating a blend of 0.5 part by weight of 1,3-bis(tert-butylperoxyisopropyl)benzene, 1 part by weight of divinylbenzene and a mixture of:

    70 parts by weight of an ethylene-propylene-5-ethylidene-2-norbornene terpolymer (EPT) (ethylene content: 80 % by mol, iodine value: 13, Mooney viscosity $ML_{1+4}$ (100 °C, JIS K 6300): 75),
    20 parts by weight of a polypropylene resin (ethylene content: 12 % by mol, density: 0.90 $g/cm^3$, MFR (ASTM D 1238, 230 °C, load of 2.16 kg): 15 g/10 min), and
    10 parts by weight of a polyethylene resin (density: 0.92 $g/cm^3$, MFR (ASTM D 1238, 190 °C, load of 2.16 kg): 18 g/10 min).

(2) partially crosslinked thermoplastic elastomer (hereinafter abbreviated to "TPE-2")

This thermoplastic elastomer is obtained by dynamically heat treating a blend of 0.5 part by weight of 2,5-dimethyl-2,5-di(tert-butylperoxy)hexyne-3, 1 part by weight of divinylbenzene and a mixture of:

    65 parts by weight of EPT (ethylene content: 75 % by mol, iodine value: 10, Mooney viscosity $ML_{1+4}$ (100 °C, JIS K 6300): 120),
    15 parts by weight of a polypropylene resin (ethylene content: 12 % by mol, density: 0.90 $g/cm^3$, MFR (ASTM D 1238, 230 °C, load of 2.16 kg) : 15 g/10 min),
    20 parts by weight of a paraffinic process oil, and
    0.3 part by weight of Irganox 1010 (available from Ciba-Geigy) as an antioxidant.

(Polypropylene resin)

(1) propylene-ethylene block copolymer (ethylene content: 18.0 % by mol, MFR (ASTM D 1238, 230 °C, load of 2.16 kg): 0.5 g/10 min) (hereinafter abbreviated to "PP-1")

Example 1

A mixture of 10 parts by weight of PB-1 as a poly-1-butene resin, 70 parts by weight of TPE-1 as an olefin thermoplastic elastomer, 20 parts by weight of PP-1 as a polypropylene resin, 0.3 part by weight of carbon black of furnace type (No. 30, available from Mitsubishi Chemical Industries, Ltd.) as a pigment, 0.5 part by weight of Tinuvin 326 (available from Ciba-Geigy) as a light stabilizer, 0.2 part by weight of Irganox 1010 and 0.2 part by weight of Irganox 1076 (both available from Ciba-Geigy) as antioxidants was melt kneaded in a single-screw extruder having a diameter of 65 mm, to obtain a composition.

The composition was formed into a sheet having a thickness of 0.1 mm by means of a sheet forming machine, and the sheet was then embossed by an embossing machine to give a lining sheet. The sheet forming machine used herein was a single-screw extruder having a diameter of 120 mm, and the sheet forming conditions were a die width of 1,400 mm, a lip opening of 1.0 mm, a cylinder temperature of 220 °C, a die temperature of 200 °C and a take-up rate of 3 m/min.

The thickness of the sheet was decreased by increasing the take-up rate under the above-mentioned sheet forming conditions to measure the smallest sheet thickness with which the sheet has no non-uniformity in thickness. Based on the smallest sheet thickness thus measured, the composition was evaluated for thin film-forming properties.

Further, the lining sheet obtained at a take-up rate of 3 m/min was subjected to a tensile test, a damage resistance test and a penetration resistance test in accordance with the following methods. Further, the lining sheet was evaluated for embossing characteristics based on the following criteria:

(Test methods)

(a) The tensile test was carried out in accordance with ASTM D 638 to measure stress at yield (YS), tensile strength at break (TS), elongation at break (EL), tensile modulus (E), 50 % modulus ($M_{50}$), 100 % modulus ($M_{100}$) and modulus ratio ($M_{100}/M_{50}$).

(b) The damage resistance test was carried using a cotton cloth (shirting No. 3) as an abrasive cloth by means of a vibration type abrasion tester (produced by Toyo Seiki K.K.) under the conditions of a load of 500 g (33 g/cm$^2$), abrasion times of 200, a stroke of 200 mm and a rate of 300 times/min.

The damage resistance of the lining sheet was evaluated based on the following three criteria:

1:      very poor
2:      poor
3:      good

(c) The penetration resistance test was carried out in the following manner using a universal testing machine (produced by Instron Co.). The lining sheet was fixed on a fixture having a diameter of 5 cm to measure a maximum stress given when a needle with a flat tip of 1.0 mm in diameter penetrated the sheet at a rate of 50 mm/min, and the maximum stress obtained was taken as a penetration strength.

The results are set forth in Table 1.

(d) The embossing characteristics of the lining sheet were evaluated based on the following three criteria:

1:      very poor
2:      poor
3:      good

Examples 2, 3 & 4, Comparative Examples 1, 2 & 3

Lining sheets were obtained in the same manner as described in Example 1 except that PB-1, PB-2, TPE-1, TPE-2 and PP-1 were mixed in the amounts set forth in Table 1.

Each of the lining sheets obtained was subjected to a tensile test, a damage resistance test and a penetration resistance test in accordance with the above-described methods. The embossing characteristics were evaluated in the same manner as described above. Further, the thin film-forming properties of the composition in each of these examples were evaluated in the same manner as described in Example 1.

The results are set forth in Table 1.

Table 1

| | Example 1 | Example 2 | Example 3 | Example 4 | Comp.Ex.1 | Comp.Ex.2 | Comp.Ex.3 |
|---|---|---|---|---|---|---|---|
| Composition | | | | | | | |
| PB-1 | 10 | 25 | 10 | 20 | – | 3 | 30 |
| PB-2 | – | – | 10 | – | – | – | – |
| TPE-1 | 70 | 60 | 60 | – | 70 | 70 | 70 |
| TPE-2 | – | – | – | 60 | – | – | – |
| PP-1 | 20 | 15 | 20 | 20 | 30 | 27 | – |
| YS (kgf/cm$^2$) | 280/250 | 290/250 | 280/240 | 290/260 | 260/220 | 260/210 | 300/230 |
| TS (kgf/cm$^2$) | 570/550 | 550/540 | 560/530 | 550/540 | 620/640 | 600/610 | 430/470 |
| EL (%) | 1100/1000 | 1200/1000 | 1200/1100 | 1200/1100 | 1300/1100 | 1200/1100 | 800/700 |
| E (kgf/cm$^2$) | 65 | 65 | 65 | 65 | 65 | 65 | 65 |
| M$_{50}$ (kgf/cm$^2$) | 80 | 85 | 85 | 85 | 70 | 75 | 90 |
| M$_{100}$/M$_{50}$ | 1.23 | 1.31 | 1.31 | 1.31 | 1.08 | 1.15 | 1.38 |
| Resistance to damage | 3 | 3 | 3 | 3 | 2 | 2 | 3 |
| Penetration strength (kg/mm) | 4.4 | 4.5 | 4.3 | 4.2 | 2.2 | 2.7 | 3.5 |
| Embossing characteristics | 3 | 3 | 3 | 3 | 2 | 2 | 3 |
| Thin film forming property (μ) | 100 | 80 | 80 | 80 | 250 | 220 | 80 |

(Remark 1) The unit of the value in the composition is part(s) by weight.
(Remark 2) YS, TS, EL, E: value in the sheet forming direction
/ value in the vertical direction
(Remark 3) M$_{50}$, M$_{100}$: value in the sheet forming direction

As is apparent from Table 1, the values M$_{100}$/M$_{50}$ of the lining sheets of Example 1 to Example 4 are in the range of 1.23 to 1.31, and they are larger than the values M$_{100}$/M$_{50}$ of the lining sheets of Comparative Example 1 and Comparative Example 2 (1.08 to 1.15). This means that as the deformation is from 50 % to 100 % large, in the course of deformation of the surface sheet owing to the stress, the deformation stress is more increased, and as a result, local deformation hardly takes place. This fact is connected with the fact that the surface sheet of a laminate is uniformly deformed and the corner portion is hardly wrinkled during molding of the laminate.

The penetration strength of the lining sheet of the Comparative Example 3 is lower than that of the lining sheets of Example 1 to Example 4, and therefore the lining sheet of Comparative Example 3 has inferior resistance to penetration compared to the lining sheets of Example 1 to Example 4.

Example 5

Using a sheet forming machine equipped with a embossing roll so as to simultaneously conduct embossing and sheet forming, an embossed sheet (lining sheet) having a thickness of 0.1 mm was formed from the same resin composition as in Example 1, while a polyethylene foam sheet having an expansion ratio of 30 and a thickness of 2.0 mm was laminated on the lining sheet, to obtain a laminate.

The sheet forming machine used herein was a single-screw extruder having a diameter of 120 mm, and the sheet forming conditions were a die width of 1,400 mm, a lip opening of 1.0 mm, a cylinder temperature of 220 °C, a die temperature of 200 °C and a take-up rate of 3 m/min.

The laminate was subjected to a damage resistance test, a penetration resistance test and a moldability test. Further, the laminate was evaluated for embossing characteristics and resistance to hot pressing.

The moldability test was carried out in the following manner using a hot press molding machine preset at upper and lower mold temperatures of 150 °C. On the top surface of the lower mold of the hot press molding machine, a corrugated paperboard was set as an aggregate, on which the laminate obtained above was placed. Then, the upper mold was let down to apply a pressure to the laminate of 50 kg/cm$^2$ for 20 seconds. Thereafter, the mold was opened, and the surface of the laminate was visually observed to evaluate the moldability. Further, the laminate was also evaluated for resistance to hot pressing based on the upper limit of the temperature at which the surface glossiness of the lining sheet was maintained (i.e., the glossiness did not increase).

The moldability was evaluated based on the following three criteria:

AA:     The corner portion is not wrinkled.
BB:     The corner portion is slightly wrinkled.
CC:     The corner portion is apparently wrinkled.

The results are set forth in Table 2.

Example 6

A laminate was obtained in the same manner as described in Example 5 except that a resin composition identical with that used in Example 2 was used.

The laminate was subjected to the damage resistance test, the penetration resistance test and the moldability test. Further, the laminate was evaluated for embossing characteristics and resistance to hot pressing.

The results are set forth in Table 2.

Example 7

A laminate was obtained in the same manner as described in Example 5 except that a resin composition identical with that used in Example 3 was used.

The laminate was subjected to the damage resistance test, the penetration resistance test and the moldability test. Further, the laminate was evaluated for embossing characteristics and resistance to hot pressing.

The results are set forth in Table 2.

Example 8

A laminate was obtained in the same manner as described in Example 5 except that a resin composition identical with that used in Example 4 was used.

The laminate was subjected to the damage resistance test, the penetration resistance test and the moldability test. Further, the laminate was evaluated for embossing characteristics and resistance to hot pressing.

The results are set forth in Table 2.

Comparative Example 4

A laminate was obtained in the same manner as described in Example 5 except that a resin composition identical with that used in Comparative Example 1 was used.

The laminate was subjected to the damage resistance test, the penetration resistance test and the moldability test. Further, the laminate was evaluated for embossing characteristics and resistance to hot pressing.

The results are set forth in Table 2.

Comparative Example 5

A laminate was obtained in the same manner as described in Example 5 except that a resin composition identical with that used in Comparative Example 2 was used.

The laminate was subjected to the damage resistance test, the penetration resistance test and the moldability test. Further, the laminate was evaluated for embossing characteristics and resistance to hot pressing.

The results are set forth in Table 2.

Comparative Example 6

A laminate was obtained in the same manner as described in Example 5 except that a resin composition identical with that used in Comparative Example 3 was used.

The laminate was subjected to the damage resistance test, the penetration resistance test and the moldability test. Further, the laminate was evaluated for embossing characteristics and resistance to hot pressing.

The results are set forth in Table 2.

Table 2

|  | Ex.5 | Ex.6 | Ex.7 | Ex.8 | Comp. Ex. 4 | Comp. Ex. 5 | Comp. Ex. 6 |
|---|---|---|---|---|---|---|---|
| Resistance to damage | 3 | 3 | 3 | 3 | 2 | 2 | 3 |
| Penetration strength (kg/mm) | 5.4 | 5.6 | 5.4 | 5.1 | 3.3 | 3.8 | 4.5 |
| Moldability | AA | AA | AA | AA | BB | BB | AA |
| Embossing characteristics | 3 | 3 | 3 | 3 | 2 | 2 | 3 |
| Resistance to hot pressing (°C) | 125 | 120 | 120 | 125 | 130 | 130 | 105 |

**Claims**

1.  A lining sheet for a vehicle ceiling which sheet comprises a poly-1-butene resin (I) in an amount of 5 to 40 parts by weight,

    an olefin thermoplastic elastomer (II) in an amount of 50 to 80 parts by weight, and
    a polypropylene resin (III) in an amount of 5 to 30 parts by weight,
    the total amount of said components (I), (II) and (III) being 100 parts by weight;
    wherein the elastomer (II) is a partially crosslinked thermoplastic elastomer obtainable by dynamically heat treating, in the presence of an organic peroxide, a mixture comprising an ethylene-$\alpha$-olefin copolymer rubber (a) in an amount of 30 to 90 parts by weight, and either

    (i) a polypropylene resin (b) in an amount of 10 to 70 parts by weight, the total amount of components (a) and (b) being 100 parts by weight, or
    (ii) a polypropylene resin (b) in an amount of 5 to 50 parts by weight, and a polyethylene resin (c) in an amount of 5 to 25 parts by weight, the total amount of components (a), (b) and (c) being 100 parts by weight.

2.  A laminate comprising a lining sheet layer according to claim 1 and a polyolefin foam layer.

3.  A lining sheet layer according to claim 1 or a laminate according to claim 2 wherein the olefin thermoplastic elastomer (II) is a partially crosslinked thermoplastic elastomer obtainable by dynamically heat treating, in the presence of an organic peroxide, a mixture comprising an ethylene-$\alpha$-olefin copolymer rubber (a) in an amount of 30 to 90 parts by weight, and a polypropylene resin (b) in an amount of 10 to 70 parts by weight, the total amount of components (a) and (b) being 100 parts by weight.

4. A lining sheet layer according to claim 1 or a laminate according to claim 2 wherein the olefin thermoplastic elastomer (II) is a partially crosslinked thermoplastic elastomer obtainable by dynamically heat treating, in the presence of an organic peroxide, a mixture comprising an ethylene-$\alpha$-olefin copolymer rubber (a) in an amount of 30 to 90 parts by weight, a polypropylene resin (b) in an amount of 5 to 50 parts by weight, and a polyethylene resin (c) in an amount of 5 to 25 parts by weight, the total amount of components (a), (b) and (c) being 100 parts by weight.

5. A lining sheet layer or laminate according to any one of claims 1 to 4 wherein the surface of the lining sheet layer has been embossed.

6. A process for producing a lining sheet layer or a laminate according to claim 3 comprising forming the thermoplastic elastomer (II) by dynamically heat treating, in the presence of an organic peroxide, a mixture comprising an ethylene-$\alpha$-olefin copolymer rubber (a) in an amount of 30 to 90 parts by weight, and a polypropylene resin (b) in an amount of 10 to 70 parts by weight, the total amount of said components (a) and (b) being 100 parts by weight; melt kneading the poly-1-butene resin (I), the thermoplastic elastomer (II) and the polypropylene resin (III) in a kneading machine; forming the thus formed composition into a sheet using a sheet forming machine; and, if desired, forming the thus formed sheet into a laminate with a polyolefin foam layer.

7. A process for producing a lining sheet layer or a laminate according to claim 4 comprising forming the thermoplastic elastomer (II) by dynamically heat treating, in the presence of an organic peroxide, a mixture comprising an ethylene-$\alpha$-olefin copolymer rubber (a) in an amount of 30 to 90 parts by weight, a polypropylene resin (b) in an amount of 5 to 50 parts by weight, and a polyethylene resin (c) in an amount of 5 to 25 parts by weight, the total amount of components (a), (b) and (c) being 100 parts by weight; melt kneading the poly-1-butene resin (I), the thermoplastic elastomer (II) and the polypropylene resin (III) in a kneading machine; forming the thus formed composition into a sheet using a sheet forming machine; and, if desired, forming the thus formed sheet into a laminate with a polyolefin foam layer.

8. Use of a lining sheet layer according to claim 1 in the production of a laminate according to claim 2.

9. Use of a laminate according to claim 2 in the production of a shaped article.

10. A shaped article formed of a laminate according to claim 2.

**Patentansprüche**

1. Folie zur Innenverkleidung eines Kraftfahrzeugdaches, wobei die Folie umfaßt

ein Poly-1-butenharz (I) in einer Menge von 5 bis 40 Gewichtsteilen,
ein thermoplastisches Olefinelastomer (II) in einer Menge von 50 bis 80 Gewichtsteilen und
ein Polypropylenharz (III) in einer Menge von 5 bis 30 Gewichtsteilen,
wobei die Gesamtmenge der Komponenten (I), (II) und (III) 100 Gewichtsteile beträgt,
wobei das Elastomer (II) ein teilweise vernetztes thermoplastisches Elastomer ist, erhältlich durch dynamische Wärmebehandlung eines Gemisches in Gegenwart eines organischen Peroxids, wobei das Gemisch einen Ethylen/$\alpha$-Olefin-Copolymerkautschuk (a) in einer Menge von 30 bis 90 Gewichtsteilen und entweder

(i) ein Polypropylenharz (b) in einer Menge von 10 bis 70 Gewichtsteilen, wobei die Gesamtmenge der Komponenten (a) und (b) 100 Gewichtsteile beträgt, oder
(ii) ein Polypropylenharz (b) in einer Menge von 5 bis 50 Gewichtsteilen und ein Polyethylenharz (c) in einer Menge von 5 bis 25 Gewichtsteilen, wobei die Gesamtmenge der Komponenten (a), (b) und (c) 100 Gewichtsteile beträgt, umfaßt.

2. Laminat, umfassend eine Schicht aus einer Verkleidungsfolie nach Anspruch 1 und eine Schicht aus einem Polyolefinschaumstoff.

3. Verkleidungsfolienbahn nach Anspruch 1 oder Laminat nach Anspruch 2, wobei das thermoplastische Olefinelastomer (II) ein teilweise vernetztes thermoplastisches Elastomer ist, erhältlich durch dynamische Wärmebehandlung eines Gemisches, umfassend einen Ethylen/$\alpha$-Olefin-Copolymerkautschuk (a) in einer Menge von 30 bis 90 Gewichtsteilen und ein Polypropylenharz (b) in einer Menge von 10 bis 70 Gewichtsteilen, wobei die Gesamtmenge der Komponenten (a) und (b) 100 Gewichtsteile beträgt, in Gegenwart eines organischen Peroxids.

4. Verkleidungsfolienbahn nach Anspruch 1 oder Laminat nach Anspruch 2, wobei das thermoplastische Olefinelastomer (II) ein teilweise vernetztes thermoplastisches Elastomer ist, erhältlich durch dynamische Wärmebehandlung eines Gemisches, umfassend einen Ethylen/α-Olefin-Copolymerkautschuk (a) in einer Menge von 30 bis 90 Gewichtsteilen und ein Polypropylenharz (b) in einer Menge von 5 bis 50 Gewichtsteilen, sowie ein Polyethylenharz (c) in einer Menge von 5 bis 25 Gewichtsteilen, wobei die Gesamtmenge der Komponenten (a), (b) und (c) 100 Gewichtsteile beträgt, in Gegenwart eines organischen Peroxids.

5. Verkleidungsfolienbahn oder Laminat nach einem der Ansprüche 1 bis 4, wobei die Oberfläche der Verkleidungsfolienbahn geprägt ist.

6. Verfahren zur Herstellung einer Verkleidungsfolienbahn oder eines Laminats nach Anspruch 3, umfassend das Bilden des thermoplastischen Elastomers (II) durch dynamische Wärmebehandlung eines Gemisches, umfassend einen Ethylen/α-Olefin-Copolymerkautschuk (a) in einer Menge von 30 bis 90 Gewichtsteilen und ein Polypropylenharz (b) in einer Menge von 10 bis 70 Gewichtsteilen, wobei die Gesamtmenge der Komponenten (a) und (b) 100 Teile beträgt, in Gegenwart eines organischen Peroxids, Verkneten des Poly-1-butenharzes (I), des thermoplastischen Elastomers (II) und des Polypropylenharzes (III) in der Schmelze in einer Knetvorrichtung, Formen der so gebildeten Masse zu einer Folie unter Anwendung einer Folienformvorrichtung und, soweit erwünscht, Formen der so gebildeten Folie zu einem Laminat mit einer Polyolefinschaumstoffschicht.

7. Verfahren zur Herstellung einer Verkleidungsfolienbahn oder eines Laminats nach Anspruch 4, umfassend das Bilden des thermoplastischen Elastomers (II) durch dynamische Wärmebehandlung eines Gemisches, umfassend einen Ethylen/α-Olefin-Copolymerkautschuk (a) in einer Menge von 30 bis 90 Gewichtsteilen, ein Polypropylenharz (b) in einer Menge von 5 bis 50 Gewichtsteilen und ein Polyethylenharz (c) in einer Menge von 5 bis 25 Gewichtsteilen, wobei die Gesamtmenge der Komponenten (a), (b) und (c) 100 Gewichtsteile beträgt, in Gegenwart eines organischen Peroxids, Verkneten des Poly-1-butenharzes (I), des thermoplastischen Elastomers (II) und des Polypropylenharzes (III) in der Wärme in einer Knetvorrichtung, Formen der so gebildeten Masse zu einer Folie unter Anwendung einer Folienformvorrichtung und, soweit erwünscht, Formen der so gebildeten Folie zu einem Laminat mit einer Polyolefinschaumstoffschicht.

8. Verwendung einer Verkleidungsfolienbahn nach Anspruch 1 zur Herstellung eines Laminats nach Anspruch 2.

9. Verwendung eines Laminats nach Anspruch 2 zur Herstellung eines Formkörpers.

10. Formkörper, gebildet aus einem Laminat nach Anspruch 2.

**Revendications**

1. Feuille de revêtement pour pavillon de véhicule, laquelle feuille comporte

de 5 à 40 parties en poids d'une résine de poly-1-butène (I),
de 50 à 80 parties en poids d'un élastomère thermoplastique d'oléfine (II), et
de 5 à 30 parties en poids d'une résine de polypropylène (III), la quantité totale de ces composants (I), (II) et (III) faisant 100 parties en poids,
et dans laquelle l'élastomère (II) est un élastomère thermoplastique partiellement réticulé qu'on peut obtenir en soumettant à un traitement thermique dynamique, en présence d'un peroxyde organique, un mélange comprenant de 30 à 90 parties en poids d'un caoutchouc copolymère d'éthylène et d'α-oléfine (a), et soit

1) de 10 à 70 parties en poids d'une résine de polypropylène (b), la quantité totale des composants (a) et (b) faisant 100 parties en poids, soit
2) de 5 à 50 parties en poids d'une résine de polypropylène (b) et de 5 à 25 parties en poids d'une résine de polyéthylène (c), la quantité totale des composants (a), (b) et (c) faisant 100 parties en poids.

2. Stratifié comportant une couche qui est une feuille de revêtement conforme à la revendication 1, et une couche de mousse de polyoléfine.

3. Couche constituant une feuille de revêtement conforme à la revendication 1, ou stratifié conforme à la revendication 2, dans laquelle ou dans lequel l'élastomère thermoplastique d'oléfine (II) est un élastomère thermoplastique partiellement réticulé qu'on peut obtenir en soumettant à un traitement thermique dynamique, en présence d'un peroxyde organique, un mélange comprenant de 30 à 90 parties en poids d'un caoutchouc copolymère d'éthylène et d'$\alpha$-oléfine (a) et de 10 à 70 parties en poids d'une résine de polypropylène (b), la quantité totale des composants (a) et (b) faisant 100 parties en poids.

4. Couche constituant une feuille de revêtement conforme à la revendication 1, ou stratifié conforme à la revendication 2, dans laquelle ou dans lequel l'élastomère thermoplastique d'oléfine (II) est un élastomère thermoplastique partiellement réticulé qu'on peut obtenir en soumettant à un traitement thermique dynamique, en présence d'un peroxyde organique, un mélange comprenant de 30 à 90 parties en poids d'un caoutchouc copolymère d'éthylène et d'$\alpha$-oléfine (a), de 5 à 50 parties en poids d'une résine de polypropylène (b) et de 5 à 25 parties en poids d'une résine de polyéthylène (c), la quantité totale des composants (a), (b) et (c) faisant 100 parties en poids.

5. Couche constituant une feuille de revêtement ou stratifié, conforme à l'une des revendications 1 à 4, dans laquelle ou dans lequel la surface de la couche constituant une feuille de revêtement a été gaufrée.

6. Procédé de production d'une couche constituant une feuille de revêtement ou d'un stratifié conforme à la revendication 3, qui comporte :

   le fait de préparer l'élastomère thermoplastique (II) en soumettant à un traitement thermique dynamique, en présence d'un peroxyde organique, un mélange comprenant de 30 à 90 parties en poids d'un caoutchouc copolymère d'éthylène et d'$\alpha$-oléfine (a) et de 10 à 70 parties en poids d'une résine de polypropylène (b), la quantité totale des composants (a) et (b) faisant 100 parties en poids ;
   le fait de malaxer à l'état fondu, dans une machine de malaxage, la résine de poly-1-butène (I), l'élastomère thermoplastique (II) et la résine de polypropylène (III) ;
   le fait de mettre sous forme d'une feuille la composition ainsi obtenue, au moyen d'une machine servant à former des feuilles ;
   et si on le souhaite, le fait de mettre sous la forme d'un stratifié la feuille ainsi obtenue, en y adjoignant une couche de mousse de polyoléfine.

7. Procédé de production d'une couche constituant une feuille de revêtement ou d'un stratifié conforme à la revendication 4, qui comporte :

   le fait de préparer l'élastomère thermoplastique (II) en soumettant à un traitement thermique dynamique, en présence d'un peroxyde organique, un mélange comprenant de 30 à 90 parties en poids d'un caoutchouc copolymère d'éthylène et d'$\alpha$-oléfine (a), de 5 à 50 parties en poids d'une résine de polypropylène (b) et de 5 à 25 parties en poids d'une résine de polyéthylène (c), la quantité totale des composants (a), (b) et (c) faisant 100 parties en poids ;
   le fait de malaxer à l'état fondu, dans une machine de malaxage, la résine de poly-1-butène (I), l'élastomère thermoplastique (II) et la résine de polypropylène (III) ;
   le fait de mettre sous forme d'une feuille la composition ainsi obtenue, au moyen d'une machine servant à former des feuilles ;
   et si on le souhaite, le fait de mettre sous la forme d'un stratifié la feuille ainsi obtenue, en y adjoignant une couche de mousse de polyoléfine.

8. Emploi d'une couche constituant une feuille de revêtement conforme à la revendication 1, dans la production d'un stratifié conforme à la revendication 2.

9. Emploi d'un stratifié conforme à la revendication 2, dans la production d'un article façonné.

10. Article façonné, formé d'un stratifié conforme à la revendication 2.